Europäisches Patentamt

European Patent Office

Office européen des brevets

(19)

(11) Numéro de publication : **0 067 735**
**B1**

(12) **FASCICULE DE BREVET EUROPÉEN**

(45) Date de publication du fascicule du brevet :
28.08.85

(51) Int. Cl.⁴ : **B 60 N   1/06**

(21) Numéro de dépôt : **82400894.0**

(22) Date de dépôt : **14.05.82**

(54) Dispositif de réglage en hauteur pour siège de véhicule.

(30) Priorité : **17.06.81 FR 8111979**

(43) Date de publication de la demande :
**22.12.82 Bulletin 82/51**

(45) Mention de la délivrance du brevet :
**28.08.85 Bulletin 85/35**

(84) Etats contractants désignés :
**DE GB IT SE**

(56) Documents cités :
**EP-A- 0 029 377**
**DE-A- 2 051 958**
**FR-A- 2 436 587**

(73) Titulaire : **COMPAGNIE INDUSTRIELLE DE MECANIS-
MES en abrégé C.I.M. Société dite:**
**6, Rue Barbès**
**F-92302 Levallois-Perret (FR)**

(72) Inventeur : **Chevalier, Claude**
**91 Route de Cordon**
**F-45600 Sully Sur Loire (FR)**

(74) Mandataire : **Bressand, Georges et al**
**c/o CABINET LAVOIX 2 Place d'Estienne d'Orves**
**F-75441 Paris Cedex 09 (FR)**

Jouve, 18, rue St-Denis, 75001 Paris, France

## Description

La présente invention est relative à un dispositif de réglage en hauteur d'un élément par rapport à son support, du type comprenant une crémaillère solidaire du support et un secteur denté manœuvrable monté pivotant sur ledit élément. Elle s'applique notamment au réglage en hauteur d'une extrémité d'un siège de véhicule automobile afin de régler l'assiette de ce siège.

Dans des dispositifs connus du type précité (voir par exemple le DE-A-2 051 958), le secteur denté est directement en prise avec la crémaillère. Pour obtenir simultanément un grand nombre de positions de réglage et une résistance mécanique suffisante, il faut prévoir de nombreuses petites dents usinées avec précision. De plus, le dispositif est relativement encombrant.

L'invention a pour but de fournir un dispositif de réglage peu encombrant permettant, pour une finesse de réglage et une épaisseur de dents données, d'utiliser des dents beaucoup plus grosses, moins coûteuses à réaliser.

A cet effet, l'invention a pour objet un dispositif de réglage du type précité, caractérisé en ce qu'il comprend un engrenage démultiplicateur d'effort interposé entre la crémaillère et le secteur denté, cet engrenage étant constitué par un double pignon tourillonnant sur un axe commun qui présente une petite denture en prise avec la crémaillère et une grande denture en prise avec le secteur denté en position de repos.

L'invention a également pour objet un soubassement de siège de véhicule, du type comprenant une armature de siège articulée par une extrémité sur un profilé d'une coulisse de réglage longitudinal et pourvue à son autre extrémité d'un mécanisme de rehausse, caractérisé en ce que ce mécanisme comprend de chaque côté du soubassement un dispositif de réglage conforme à la définition ci-dessus, et des moyens de synchronisation de ces deux dispositifs.

L'invention est exposée ci-après plus en détail à l'aide des dessins annexés, qui en représentent seulement un mode d'exécution. Sur ces dessins :

La Figure 1 est une vue en élévation latérale d'un soubassement de siège de véhicule automobile pourvu d'un dispositif de réglage conforme à l'invention ;

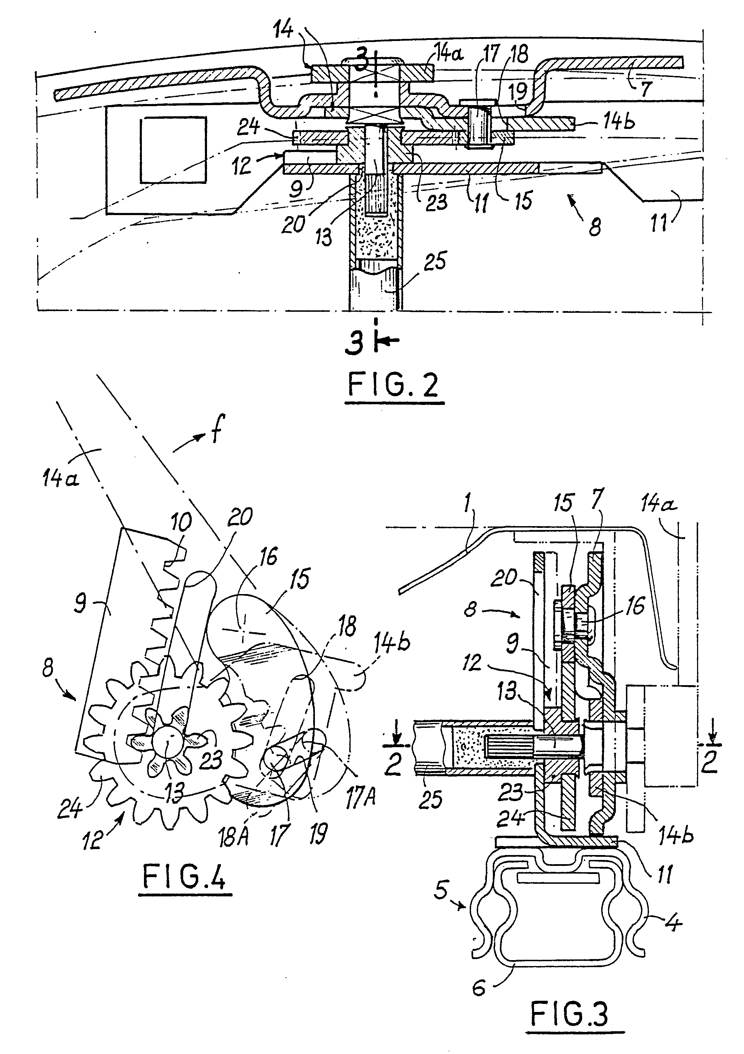

La Figure 2 est une vue partielle à plus grande échelle prise en coupe suivant la ligne 2-2 de la Fig. 1 ou de la Fig. 3 ;

La Figure 3 est une vue partielle, à la même échelle que la Fig. 2, prise en coupe suivant la ligne 3-3 de la Fig. 1 ou de la Fig. 2 ;

La Figure 4 est une vue schématique en élévation latérale du dispositif de réglage.

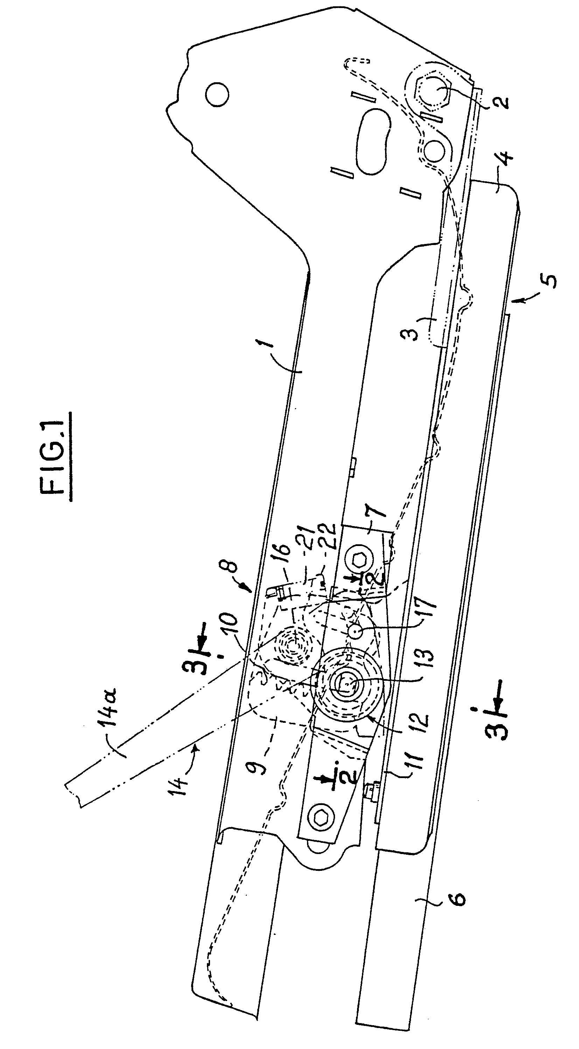

On voit à la Fig. 1 une armature de bas de siège 1 articulée par son bord arrière autour d'un axe horizontal 2. A chaque extrémité, l'axe 2 est solidaire d'une ferrure 3 fixée sur le profilé mobile 4 d'une coulisse 5 de réglage avant-arrière du siège dont le profilé fixe 6 est fixé au plancher du véhicule (non représenté).

Près de son extrémité avant, l'armature 1 porte d'un côté une plaque latérale 7 qui porte elle-même la partie mobile du dispositif 8 de réglage d'assiette, dont la partie fixe est constituée par une crémaillère verticale 9 à denture 10 en arc de cercle centrée sur l'axe 2 et tournée vers celui-ci. La crémaillère 9 est solidaire d'une ferrure 11 fixée au profilé mobile 4.

La partie mobile du dispositif 8 comprend un pignon double 12 tourillonnant sur un axe 13 tourillonnant lui-même sur la plaque 7, un levier d'actionnement 14 calé sur le même axe 13, et un secteur denté 15 en forme de haricot tourillonnant sur un second axe 16 solidaire de la plaque 7. Le levier 14 est constitué d'une manette 14a et d'une plaquette d'actionnement 14b toutes deux calées sur l'axe 13. Un ergot 17 en saillie sur le secteur 15 traverse une boutonnière 18 de la plaquette 14b et une boutonnière 19 de la plaque 7, tandis que l'axe 13 est guidé dans une boutonnière en arc de cercle 20 de la ferrure fixe 11 parallèle à la denture 10 de la crémaillère et voisine de celle-ci.

Le levier 14 est sollicité vers sa position de blocage, c'est-à-dire dans le sens antihoraire en considérant les Fig. 1 et 4, par un ressort de traction 21 agissant entre un appendice 22 de la plaquette 14b et l'armature 1. Le pignon 12 présente une petite denture 23 à six dents en prise par une ou deux dents avec la denture 10 de la crémaillère, et une grande denture 24 à seize dents en prise par quatre dents avec le secteur 15 lorsque le levier 14 est au repos (Fig. 1 et 4).

Plus précisément, dans la position de repos du levier 14, la boutonnière 18 de ce dernier est orientée à peu près verticalement et coupe l'extrémité inférieure de la boutonnière 19 de la plaque 7, qui est inclinée à peu près à 30° sur l'horizontale. L'ergot 17 se trouve alors en butée contre l'extrémité inférieure de la boutonnière 19 et proche de celle de la boutonnière 18.

Lorsqu'on tire sur la manette 14a pour la faire tourner dans le sens horaire (flèche f de la Fig. 4) à l'encontre du ressort 21, la boutonnière 18 tourne autour de l'axe 13 et vient dans la position 18A de la Fig. 4. Ceci oblige l'ergot 17 à se déplacer jusqu'à l'autre extrémité de la boutonnière 19, contre laquelle il vient buter (position 17A de la Fig. 4). L'ergot 17 entraîne dans son mouvement le secteur 15, qui tourne dans le sens antihoraire autour de l'axe 16 en libérant la denture 24 du pignon 12.

Il est alors possible de soulever ou d'abaisser l'avant du siège pour modifier son assiette. La denture 23 du pignon roule sur la denture 10 de la crémaillère, le guidage étant assuré par la boutonnière fixe 20. Quand la nouvelle position désirée est atteinte, on relâche la manette 14a, ce qui ramène sous l'effet du ressort 21 la boutonnière 18, l'ergot 17 et le secteur 15 dans leurs positions initiales, le secteur 15 revenant en prise avec la denture 24.

L'autre côté du soubassement (non représenté) comporte les mêmes organes, à l'exception de la manette 14a du levier 14. La synchronisation des mouvements est assurée par une entretoise 25 qui relie rigidement les deux axes 13.

On comprend que la finesse du réglage est définie par le pas angulaire de la denture 24, qui est très inférieur à celui des dentures 23 et 10. Le nombre de crans de réglage est donc très supérieur au nombre de dents de la crémaillère 9, lesquelles peuvent être relativement grossières. En d'autres termes, le poids est supporté par seulement une ou deux des dents 10 et 23, ce qui facilite la fabrication.

De plus, l'effort est démultiplié de la crémaillère au secteur 15 dans le rapport des deux diamètres. Le secteur 15 est donc facile à déverrouiller. Les dents 24 ont à peu près les mêmes dimensions que les dents 23 ; Elles pourraient en toute rigueur être plus petites, mais ceci les rendrait plus délicates à réaliser sans apporter d'avantage supplémentaire, la précision du réglage de rehausse étant déjà suffisante, du moins pour l'application considérée.

### Revendications

1. Dispositif de réglage en hauteur d'un élément (1) par rapport à son support (5), du type comprenant une crémaillère (9) solidaire du support et un secteur denté manœuvrable (15), monté pivotant sur ledit élément, caractérisé en ce qu'il comprend un engrenage démultiplicateur d'effort (12) interposé entre la crémaillère (9) et le secteur denté (15), cet engrenage (12) étant constitué par un double pignon tourillonnant sur un axe commun (13) et, qui présente une petite denture (23) en prise avec la crémaillère (9) et une grande denture (24) en prise avec le secteur denté (15) en position de repos.

2. Dispositif de réglage suivant la revendication 1, caractérisé en ce que l'axe (13) du pignon (12) est guidé dans une boutonnière (20) parallèle à la crémaillère (9) et solidaire du support (5).

3. Soubassement de siège de véhicule, du type comprenant une armature de siège (1) articulée par une extrémité (2) sur un profilé (4) d'une coulisse (5) de réglage longitudinal et pourvue à son autre extrémité d'un mécanisme de rehausse (8), caractérisé en ce que ce mécanisme comprend de chaque côté du soubassement un dispositif de réglage (8) suivant l'une des revendications 1 et 2, et des moyens (25) de synchronisation de ces deux dispositifs.

4. Soubassement suivant la revendication 3, caractérisé en ce qu'il comporte une manette unique (14a) d'actionnement simultané des deux dispositifs de réglage (8).

### Claims

1. A device for adjusting the height of an element (1) with respect to a support (5) therefor, of the type comprising a rack (9) rigid with the support and an actuable toothed sector (15) pivotally mounted on said element, characterised in that it comprises effort reducing gear means (12) which are interposed between the rack (9) and the toothed sector (15), said gear means being constituted by a double pinion which is journalled on a common shaft (13) and which has small teeth (23) in mesh with the rack (9) and large teeth (24) in mesh with the toothed sector (15) in the position of rest.

2. A device according to claim 1, characterised in that the shaft (13) of the pinion (12) is guided in a slot (20) which is parallel to the rack (9) and rigid with the support (5).

3. A vehicle seat base of the type comprising a seat frame (1) which is pivotally mounted by one end (2) on a section member (4) of a longitudinal adjustment slideway (5) and provided at the other end thereof with a raising mechanism (8), characterised in that said mechanism comprises on each side of the base an adjusting devide (8) according to one of the claims 1 and 2, and means (25) for synchronizing said two devices.

4. A base according to claim 3, characterised in that it comprises a single actuating handle (14a) for simultaneously actuating the two adjusting devices (8).

### Patentansprüche

1. Vorrichtung zum Regeln der Höhe eines Elements (1) gegenüber seiner Unterlage (5), von der Art, die eine Zahnstange (9) aufweist, welche mit der Unterlage fest verbunden ist und mit einem bewegbaren Zahnelement (15), das um dieses Element schwenkbar ist, dadurch gekennzeichnet, daß es ein Reduziergetriebe (12) aufweist, das zwischen die Zahnstange (9) und das Zahnsegment (15) geschaltet ist, wobei das Getriebe (12) von einem Doppelritzel gebildet ist, das sich um eine gemeinsame Achse (13) dreht, das ein kleines Zahnrad (23) aufweist, welches mit der Zahnstange (9) in Eingriff steht und das ein großes Zahnrad (24) aufweist, das in der Ruhestellung mit dem Zahnsegment (15) in Eingriff steht.

2. Regelungsvorrichtung nach Anspruch 1, dadurch gekennzeichnet, daß die Achse (13) des Ritzels (12) in einem Langloch (20) geführt ist, das parallel zur Zahnstange (9) verläuft und mit der Halterung (5) verbunden ist.

3. Sockel für einen Fahrzeugsitz, von der Art, welche einen Sitzbeschlag (1) aufweist, der an einem Ende (2) über ein Profil (4) einer Gleitschiene (5) zur Längseinstellung angelenkt und an seinem anderen Ende mit einem Aufrichtmechanismus (8) versehen ist, dadurch gekennzeichnet, daß der Mechanismus an jeder Seite des Sockels eine Regelvorrichtung (8) nach einem der Ansprüche 1 und 2, und Mittel (25) zur Synchronisation der zwei Vorrichtungen aufweist.

4. Sockel nach Anspruch 3, dadurch gekennzeichnet, daß dieser einen einzigen Bedienungshebel (14a) zur gleichzeitigen Bedienung der beiden Regelvorrichtungen (8) aufweist.

# FIG.1

14α

14

3

10

8

9

16

21

22

2

7

1

11 12 13 17

6

3

3

4

5

2

3

0 067 735

FIG. 2

FIG.4

FIG.3

2